# EUROPEAN PATENT APPLICATION

(11) **EP 3 026 927 A1**
(43) Date of publication of application: **01.06.2016**
(21) Application number: 14195533.6
(22) Date of filing: 28.11.2014
(51) Int. Cl.: H04R 1/02, G06F 3/03, G03B 21/60

(54) **An apparatus, method and computer program for controlling a speaker**

(71) Applicant: Nokia Technologies OY, 02610 Espoo (FI)
(72) Inventor: LEPPÄNEN, Jussi Artturi, 33580 Tampere (FI); ERONEN, Antti Johannes, 33820 Tampere (FI); LEHTINIEMI, Arto Juhani, 33720 Tampere (FI)
(74) Representative: Swindell & Pearson Limited

(57) **Abstract**

An apparatus, method and computer program, the apparatus 1 comprising: processing circuitry 5; and memory circuitry 7 including computer program code 9; the memory circuitry and the computer program code configured to, with the processing circuitry, cause the apparatus at least to perform; controlling the position of a speaker 21 relative to a base station 22 wherein the speaker is configured to provide an audio output and the base station is configured to provide a control signal to the speaker to control the audio output of the speaker and wherein the speaker and base station are separated vertically; and detecting a user input wherein the user input comprises application of a force to the speaker 21 which changes the vertical position of the speaker relative to the base station 22; and enabling a function to be performed wherein the function which is performed is dependent upon the detected user input.

## Description

### TECHNOLOGICAL FIELD

Examples of the disclosure relate to an apparatus, method and computer program for controlling a speaker. In some examples they relate to an apparatus, method and computer program for controlling a speaker in which the speaker is separated vertically from a base station which provides a control signal to the speaker.

### BACKGROUND

Apparatus, such as speakers, which enable audio outputs to be provided to a user are known. It is useful to enable a user to control such apparatus in a simple and intuitive way. It is also useful to enable the apparatus to provide information to the users.

### BRIEF SUMMARY

According to various, but not necessarily all, examples of the disclosure there may be provided an apparatus comprising: processing circuitry; and memory circuitry including computer program code; the memory circuitry and the computer program code configured to, with the processing circuitry, cause the apparatus at least to perform; controlling the position of a speaker relative to a base station wherein the speaker is configured to provide an audio output and the base station is configured to provide a control signal to the speaker to control the audio output of the speaker and wherein the speaker and base station are separated vertically; and detecting a user input wherein the user input comprises application of a force to the speaker which changes the vertical position of the speaker relative to the base station; and enabling a function to be performed wherein the function which is performed is dependent upon the detected user input.

In some examples the speaker may be supported by an electromagnetic field.

In some examples the speaker may be supported by a support structure.

In some examples the user input may comprise at least one of; the user rotating the speaker, the user pushing the speaker, the user pulling the speaker, the user tapping the speaker.

In some examples the apparatus may be configured to control a display to display information in a space between the speaker and the base station. The information which is displayed may comprise information relating to the output of the speaker. In some examples the information which is displayed may be synchronised with the audio output of the speaker.

In some examples the speaker may be aligned vertically with the base station.

In some examples the function which is performed may be determined by the vertical separation of the speaker and the base station after the user input. The change in vertical separation of the speaker and the base station may be detected by a proximity sensor.

According to various, but not necessarily all, examples of the disclosure there may be provided a speaker comprising an apparatus as described above.

According to various, but not necessarily all, examples of the disclosure there may be provided a base station comprising an apparatus as described above.

According to various, but not necessarily all, examples of the disclosure there may be provided an apparatus comprising: means for controlling the position of a speaker relative to a base station wherein the speaker is configured to provide an audio output and the base station is configured to provide a control signal to the speaker to control the audio output of the speaker and wherein the speaker and base station are separated vertically; and means for detecting a user input wherein the user input comprises application of a force to the speaker which changes the vertical position of the speaker relative to the base station; and means for enabling a function to be performed wherein the function which is performed is dependent upon the detected user input.

According to various, but not necessarily all, examples of the disclosure there may be provided a method comprising: controlling the position of a speaker relative to a base station wherein the speaker is configured to provide an audio output and the base station is configured to provide a control signal to the speaker to control the audio output of the speaker and wherein the speaker and base station are separated vertically; and detecting a user input wherein the user input comprises application of a force to the speaker which changes the vertical position of the speaker relative to the base station; and enabling a function to be performed wherein the function which is performed is dependent upon the detected user input.

In some examples the speaker may be supported by an electromagnetic field.

According to various, but not necessarily all, examples of the disclosure there may be provided a computer program comprising computer program instructions that, when executed by processing circuitry, enable: controlling the position of a speaker relative to a base station wherein the speaker is configured to provide an audio output and the base station is configured to provide a control signal to the speaker to control the audio output of the speaker and wherein the speaker and base station are separated vertically; and detecting a user input wherein the user input comprises application of a force to the speaker which changes the vertical position of the speaker relative to the base station; and enabling a function to be performed wherein the function which is performed is dependent upon the detected user input.

According to various, but not necessarily all, examples of the disclosure there may be provided a physical entity embodying the computer program as described above.

According to various, but not necessarily all, examples of the disclosure there may be provided an electromagnetic carrier signal carrying the computer program as described above.

According to various, but not necessarily all, examples of the disclosure there may be provided an apparatus comprising: processing circuitry; and memory circuitry including computer program code; the memory circuitry and the computer program code configured to, with the processing circuitry, cause the apparatus at least to perform; controlling the position of a speaker relative to a base station wherein the speaker is configured to provide an audio output and the base station is configured to provide a control signal to the speaker to control the audio output of the speaker and wherein the speaker and base station are separated vertically; and wherein the vertical separation between the speaker and the base station is dependent upon a parameter of output of the speaker.

In some examples the parameter may be the number of songs in a playlist.

In some examples the parameter may be the number of the songs remaining in a playlist.

In some examples the parameter may be the volume of the audio output of the speaker.

According to various, but not necessarily all, examples of the disclosure there may be provided an apparatus comprising: processing circuitry; and memory circuitry including computer program code; the memory circuitry and the computer program code configured to, with the processing circuitry, cause the apparatus at least to perform; controlling the position of a speaker relative to a base station wherein the speaker is configured to provide an audio output and the base station is configured to provide a control signal to the speaker to control the audio output of the speaker and wherein the speaker and base station are separated vertically; and enabling an image to be provided between the speaker and the base station; controlling the image so that as the vertical separation between the base station and the speaker changes a size of the image changes.

In some examples controlling the size of the image may comprise at least one of; changing the amount of information in the image, changing a scale of the image.

In some examples the image may be provided on a display.

In some examples the display may be scrolled in and out as the vertical separation between the base station and the speaker changes.

In some examples the image may be provided on a fog screen.

According to various, but not necessarily all, examples of the disclosure there may be provided an apparatus comprising: processing circuitry; and memory circuitry including computer program code; the memory circuitry and the computer program code configured to, with the processing circuitry, cause the apparatus at least to perform; controlling the position of a speaker relative to a base station wherein the speaker is configured to provide an audio output and the base station is configured to provide a control signal to the speaker to control the audio output of the speaker and wherein the speaker and base station are separated vertically; detecting a change in a parameter of the audio output; and in response to detecting the change in the parameter, changing the vertical separation between the speaker and the base station.

In some examples the parameter of the audio output may comprise at least one of; the number of songs in a playlist, the time remaining in a playlist, the volume of the audio output, a musical attribute.

In some examples the change in the vertical separation between the speaker and the base station may be synchronised with a musical attribute.

In some examples the musical attribute may comprise at least one of; beat, key, chord, downbeat, tempo, energy, style, genre, rhythm, danceability.

According to various, but not necessarily all, examples of the disclosure there may be provided examples as claimed in the appended claims.

### BRIEF DESCRIPTION

For a better understanding of various examples that are useful for understanding the detailed description, reference will now be made by way of example only to the accompanying drawings in which:
Fig. 1 illustrates an apparatus;
Fig. 2 illustrates a system comprising a speaker and a base station;
Fig. 3 illustrates a method;
Fig. 4 illustrates a first example system;
Figs. 5A to 5C illustrate the first example system with the speaker at different heights;
Figs. 6A to 6C illustrate the first example system providing information to a user;
Figs. 7A and 7B illustrate a user using the system to make an input;
Figs. 8A to 8C illustrate a user using the system to make an input;
Figs. 9A to 9B illustrate a user using the system to make an input;
Figs. 10A to 10C illustrate a user using the system to make an input;
Fig. 11 illustrates an example system;
Fig. 12 illustrates an example system;
Fig. 13 illustrates another method; and
Fig. 14 illustrates a further method; and
Fig. 15 illustrates an additional method.

### DETAILED DESCRIPTION

The Figures illustrate an apparatus 1 comprising: processing circuitry 5; and memory circuitry 7 including computer program code 11; the memory circuitry 7 and the computer program code 11 configured to, with the processing circuitry 5, cause the apparatus 1 at least to perform; controlling 31 the position of a speaker 21 relative to a base station 22 wherein the speaker 21 is configured to provide an audio output and the base station 22 is configured to provide a control signal to the speaker 21 to control the audio output of the speaker 22 and wherein the speaker 21 and base station 22 are separated vertically; and detecting 33 a user input wherein the user input comprises application of a force to the speaker 21 which changes the vertical position of the speaker 21 relative to the base station 22; and enabling 35 a function to be performed wherein the function which is performed is dependent upon the detected user input.

This provides the technical effect of enabling a user to interact with a speaker and control the outputs provided by the speaker. The apparatus 1 may be for controlling the audio output of a speaker.

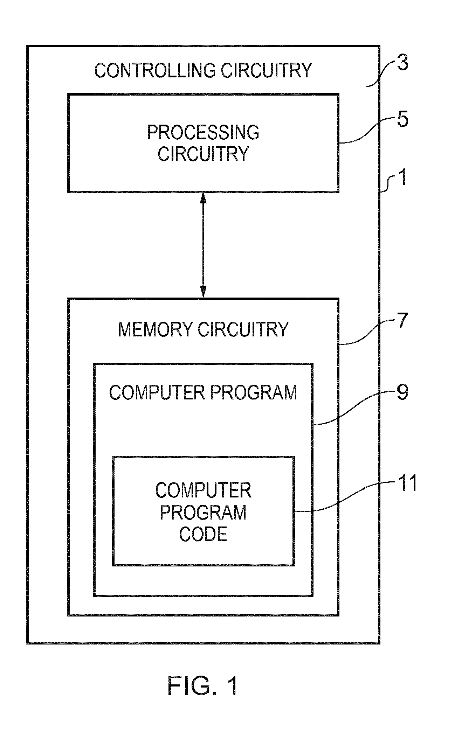

Fig. 1 schematically illustrates an example apparatus 1 which may be used in implementations of the disclosure. The apparatus 1 illustrated in Fig. 1 may be a chip or a chip-set. The apparatus 1 may be provided within an electronic device such as a speaker or a base station configured to control a speaker.

The example apparatus 1 comprises controlling circuitry 3. The controlling circuitry 3 may comprise one or more controllers. The controlling circuitry 3 may comprise means for controlling the apparatus 1. The controlling circuitry 3 may comprise means for controlling a speaker to provide an audio output. The controlling circuitry 3 may be implemented using instructions that enable hardware functionality, for example, by using executable computer program instructions in a general-purpose or special-purpose processing circuitry 5 that may be stored on a computer readable storage medium (disk, memory etc.) to be executed by such processing circuitry 5.

The processing circuitry 5 may be configured to read from and write to memory circuitry 7. The processing circuitry 5 may comprise one or more processors. The processing circuitry 5 may also comprise an output interface via which data and/or commands are output by the processing circuitry 5 and an input interface via which data and/or commands are input to the processing circuitry 5.

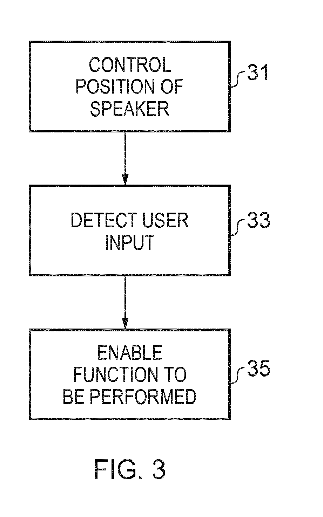

The memory circuitry 7 may be configured to store a computer program 9 comprising computer program instructions (computer program code 11) that controls the operation of the apparatus 1 when loaded into processing circuitry 5. The computer program code 11, of the computer program 9, provides the logic and routines that enables the apparatus 1 to perform the example methods illustrated in Figs. 3, 13 and 14. The processing circuitry 5 by reading the memory circuitry 7 is able to load and execute the computer program 9.

The apparatus 1 therefore comprises: processing circuitry 5; and memory circuitry 7 including computer program code 11; the memory circuitry 7 and the computer program code 11 configured to, with the processing circuitry 5, cause the apparatus 1 at least to perform: controlling 31 the position of a speaker 21 relative to a base station 22 wherein the speaker 21 is configured to provide an audio output and the base station 22 is configured to provide a control signal to the speaker 21 to control the audio output of the speaker 21 and wherein the speaker 21 and base station 22 are separated vertically; and detecting 33 a user input wherein the user input comprises application of a force to the speaker 21 which changes the vertical position of the speaker 21 relative to the base station 22; and enabling 35 a function to be performed wherein the function which is performed is dependent upon the detected user input.

The computer program 9 may arrive at the apparatus 1 via any suitable delivery mechanism. The delivery mechanism may be, for example, a non-transitory computer-readable storage medium, a computer program product, a memory device, a record medium such as a compact disc read-only memory (CD-ROM) or digital versatile disc (DVD), or an article of manufacture that tangibly embodies the computer program. The delivery mechanism may be a signal configured to reliably transfer the computer program 9. The apparatus 1 may propagate or transmit the computer program 9 as a computer data signal.

Although the memory circuitry 7 is illustrated as a single component in the figures it is to be appreciated that it may be implemented as one or more separate components some or all of which may be integrated/removable and/or may provide permanent/semi-permanent/dynamic/cached storage.

Although the processing circuitry 5 is illustrated as a single component in the figures it is to be appreciated that it may be implemented as one or more separate components some or all of which may be integrated/removable.

References to "computer-readable storage medium", "computer program product", "tangibly embodied computer program" etc. or a "controller", "computer", "processor" etc. should be understood to encompass not only computers having different architectures such as single /multi- processor architectures and sequential (Von Neumann)/parallel architectures but also specialized circuits such as field-programmable gate arrays (FPGA), application specific integrated circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term "circuitry" refers to all of the following:
(a) hardware-only circuit implementations (such as implementations in only analog and/or digital circuitry) and
(b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and
(c) to circuits, such as a microprocessor(s) or a portion of a microprocessor(s), that require software or firmware for operation, even if the software or firmware is not physically present.

This definition of "circuitry" applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in a server, a cellular network device, or other network device.

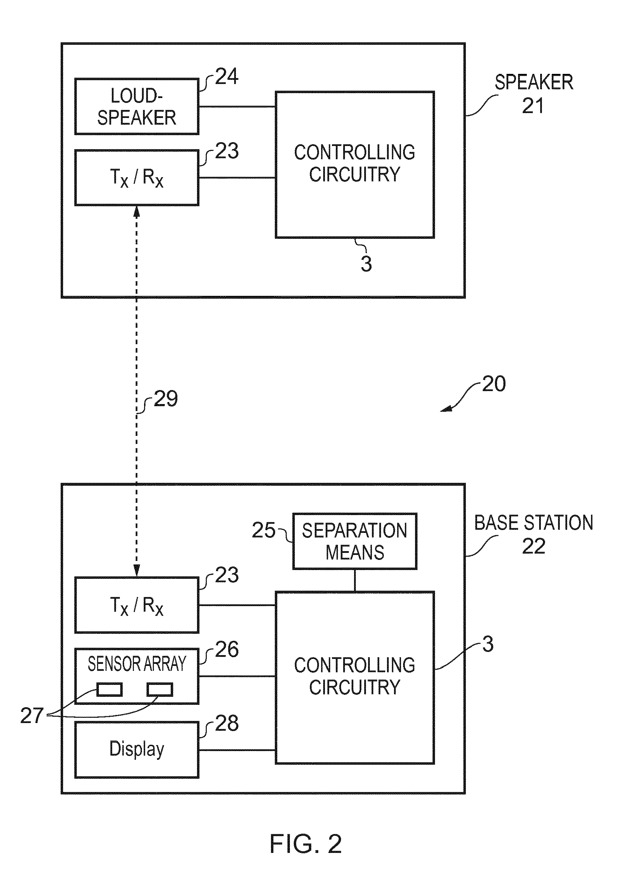

Fig. 2 schematically illustrates a system 20 according to an example of the disclosure. In the example of Fig. 2 the system 20 comprises a speaker 21 and a base station 22. The speaker 21 and/or the base station 22 may comprise an apparatus 1 comprising controlling circuitry 3 as described above in relation to Fig. 1.

In the example of Fig. 2 the speaker 21 comprises controlling circuitry 3, a transceiver 23 and a loudspeaker 24. It is to be appreciated that only components of the speaker 21 necessary for the following description are illustrated in Fig. 2. In other examples the speaker 21 may comprise other components such as a power supply or a gyrometer or any other suitable components.

The controlling circuitry 3 may be as described above. The controlling circuitry 3 may be provided within an apparatus 1 such as a chip or a chip-set. The controlling circuitry 3 may comprise any means which may be configured to control the speaker 21 to receive a control signal from the base station 22 and control the loudspeaker 24 to provide an audio output signal.

The transceiver 23 may comprise one or more transmitters and/or receivers. The transceiver 23 may comprise any means which enables the speaker 21 to establish a communication connection 29 with the base station 22 and exchange information with the base station 22.

In some examples the communication connection 29 may be a wireless communication connection 29. In some examples the wireless communication connection 29 may be a low power communication connection 29 such as Bluetooth, Bluetooth Low Energy, Bluetooth Smart, 6LoWPan (IPv6 over low power personal area networks), ZigBee, ANT+ or any other suitable connection.

The transceiver 23 may be configured to provide information obtained via the transceiver 23 to the controlling circuitry 3. The transceiver 23 may also be configured to enable information from the controlling circuitry 3 to be transmitted via the transceiver 23.

The loudspeaker 24 may comprise any means which may be configured to receive an electrical input signal and convert the received electrical input signal into an audio output signal. The loudspeaker 24 may be electrically connected to the controlling circuitry 3. The loudspeaker 24 may be configured to receive input signals from the controlling circuitry 3.

In the example of Fig. 2 only one loudspeaker 24 is illustrated in the speaker 21. In other examples more than one loudspeaker 24 may be provided.

In the example of Fig. 2 the base station 22 comprises controlling circuitry 3, a transceiver 23, separation means 25, a sensor array 26 and a display 28. The sensor array 26 may comprise one or more sensors 27. It is to be appreciated that only components of the base station 22 necessary for the following description are illustrated in Fig. 2. In other examples the base station 22 may comprise other components such as a power supply.

The controlling circuitry 3 may be as described above. The controlling circuitry 3 may be provided within an apparatus 1 such as a chip or a chip-set. The controlling circuitry 3 may comprise any means which may be configured to control the base station 22 to provide a control signal to the speaker 21 where the control signal controls the audio output of the speaker 21.

The transceiver 23 may comprise one or more transmitters and/or receivers which may be configured to establish a communication connection 29 with the speaker 21 as described above. The communication connection 29 may enable the base station 22 to transmit a control signal to the speaker 21. The communication connection 29 may also enable the speaker 21 to transmit information to the base station 22.

The separation means 25 may comprise any means which may be configured to enable the speaker 21 to be held in a separate position to the base station 22. In some examples the separation means 25 may enable the speaker 21 to be vertically separated from the base station 22. The speaker 21 may be vertically separated from the base station 22 so that there is a gap between the speaker 21 and the base station 22. The separation means 25 may be configured to support the speaker 21 so that the gap between the speaker 21 and the base station 22 remains the same or substantially the same.

The separation means 25 may be adjustable so that the vertical position of the speaker 21 relative to the base station 22 may be adjusted. In some examples the vertical position of the speaker 21 relative to the base station 22 may be adjusted in response to detection of a user input. In some examples the vertical position of the speaker 21 relative to the base station 22 may be adjusted in response to a trigger event. The trigger event may comprise a user input, a change in a parameter of the audio output or any other suitable event. In response to the detection of the trigger event the controlling circuitry 3 may be configured to control the separation means 25 to adjust the vertical position of the speaker 21.

In some examples the separation means 25 may comprise one or more electromagnets. The electromagnets may be configured to enable the speaker 21 to levitate above the base station 22. In such examples the vertical position of the speaker 21 may be controlled by controlling the strength of the electromagnet. The strength of the electromagnet may be controlled by any suitable means. In some examples the strength of the electromagnet may be controlled by controlling the current provided to the electromagnet.

In some examples the separation means 25 may comprise a mechanical support structure. In some examples the mechanical support structure may comprise a rod or pole which supports the speaker 21. The system 20 may comprise one or more motors which may enable the speaker 21 to be moved vertically along the support structure.

The sensor array 26 may comprise one or more sensors 27. The sensors 27 may comprise any means which may be configured to detect a physical parameter and provide an electrical signal indicative of the physical parameter.

The sensor array 26 may comprise a plurality of different types of sensors 27 which may be configured to detect different physical parameters. The physical parameters could comprise the distance between the speaker 21 and the base station 22, rotation of the speaker 21 or any other suitable parameter.

In some examples the sensor array 26 may comprise image sensors such as a camera or a video camera. The image sensors may enable image recognition of objects close to base station 22. In some examples the image sensors may enable the orientation of the speaker 21 to be identified.

In some examples the sensor array 26 may comprise proximity sensors. The proximity sensors may comprise any means which may be configured to enable the vertical separation between the base station 22 and the speaker 21 to be determined. In some examples the proximity sensor may comprise an optical sensor such as an infra red sensor and/or a laser range finder or any other suitable means,

In some examples the sensor array 26 may comprise one or more sensors 27 which are located within the base station 22. For instance one or more proximity sensors may be provided within the base station 22. In some examples one or more of the sensors 27 may be provided external to the base station 22. For instance an image capturing device may be provided externally to the base station 22 but may be configured to communicate with the base station 22 via the one or more transceivers 23 of the base station 22.

The sensor array 26 may be configured to provide the information obtained from the sensors 27 to the controlling circuitry 3. The controlling circuitry 3 may be configured to use the information obtained from the sensors 27 to control the system 20.

The display 28 may comprise any means which may be configured to display information to a user of the system. In some examples the display 28 may be provided in the gap between the base station 22 and the speaker 21.

Fig. 3 illustrates an example method which may be implemented using the system 20 of Fig. 2.

The method comprises, at block 31, controlling the position of a speaker 21 relative to a base station 22 wherein the speaker 21 is configured to provide an audio output and the base station 22 is configured to provide a control signal to the speaker 21 to control the audio output of the speaker 21 and wherein the speaker 21 and base station 22 are separated vertically.

The method also comprises, at block 33, detecting a user input wherein the user input comprises application of a force to the speaker 21 which changes the vertical position of the speaker 21 relative to the base station 22. At block 35 the method comprises enabling a function to be performed wherein the function which is performed is dependent upon the detected user input.

In some examples the method of Fig. 3 may be performed by the controlling circuitry 3 of the base station 22. In other examples the method may be performed by the controlling circuitry 3 of the speaker 21. In some examples the processing necessary to implement the method may be distributed between the base station 22 and the speaker 21 so that some parts of the method are performed by the base station 22 and some are performed by the speaker 21.

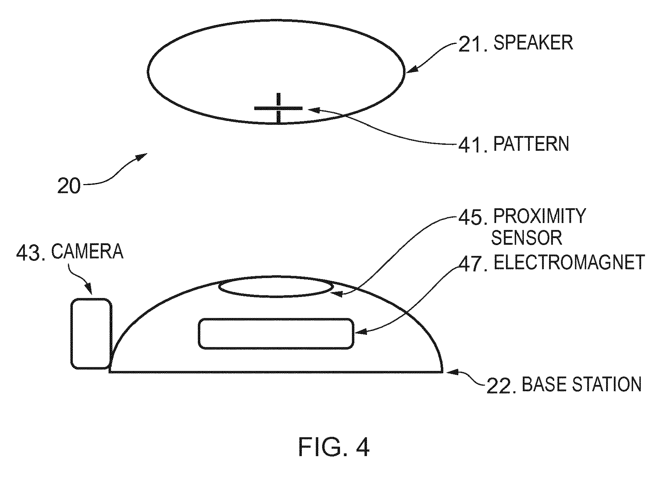

Implementations of the methods and system 20 are described in more detail with respect to Figs. 4 to 12.

Fig. 4 illustrates an example system 20 which may be used in some examples of the disclosure. The example system 20 of Fig. 4 comprises a base station 22 and speaker 21 which may be as described above. In the example of Fig. 4 the speaker 21 is arranged to levitate above the base station 22.

In the example of Fig. 4 the speaker 21 comprises a pattern 41. The pattern may be provided on the outside of the housing of the speaker 41. In the example of Fig. 4 the pattern 21 is provided on the underside of the speaker 21 so that when the speaker 21 is positioned above the base station 22 the pattern 41 can be imaged by a camera 43 of the base station 22.

The pattern 41 may comprise any graphical representation which may be detected by the base station 22. The pattern may enable the rotation of the speaker 21 to be detected. In some examples the pattern 21 may enable a change in the rotation of the speaker 21 to be detected. In the examples of Fig. 4 the pattern comprises a cross. It is to be appreciated that other patterns may be used in other examples of the disclosure.

In the example of Fig. 4 the base station 22 comprises a camera 43 and a proximity sensor 45. The camera 43 and proximity sensor 45 may be provided as part of an array of sensors 26 of the base station 22. In the example of Fig. 4 the proximity sensor 45 is illustrated within the base station 22 while the camera 43 is provided adjacent to the base station 22. It is to be appreciated that other arrangements may be used in other examples of the disclosure.

The camera 43 may be configured to detect rotation of the speaker 21. The camera 43 may detect the rotation by obtaining images of the underside of the speaker 21 and detecting when the rotation of the pattern 41 changes. Other methods of detecting rotation and/or changes in rotation of the speaker 21 may be used in other examples of the disclosure.

The proximity sensor 45 may be configured to measure the position of the speaker 21 relative to the base station 22. In some examples the proximity sensor 45 may be configured to measure the vertical separation between the base station 22 and the speaker 21. The proximity sensor 45 may comprise an optical sensor such as an infra red sensor and/or a laser range finder or any other suitable means.

The base station 22 also comprises separation means 25. In the example of Fig. 4 the separation means 25 comprises an electromagnet 47. In some examples a plurality of electromagnets may be provided. The electromagnet 47 may be configured to provide an electromagnetic force to hold the speaker 21 vertically separated from the base station 22. In some examples one or more electromagnets may also be provided in the speaker 21. The vertical separation of the base station 22 and the speaker 21 may be controlled by controlling the strength of the electromagnets. This may enable the speaker 21 positioned at different heights relative to the base station 22

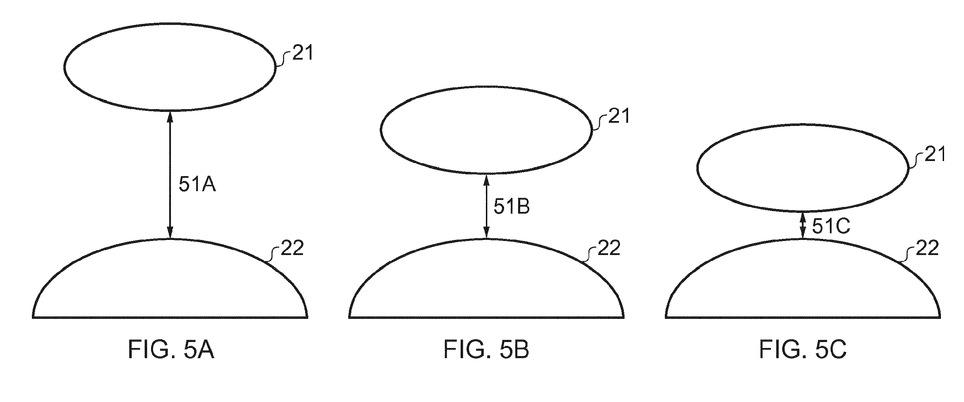

Figs. 5A to 5C illustrate the example system 20 with the speaker 21 positioned at different heights relative to the base station 22. In Fig. 5A the speaker 21 is provided at a first height relative to the base station 22. A gap 51A is provided between the speaker 21 and the base station 22.

In Fig. 5B the speaker 21 has moved relative to the base station 22. In the example of Fig. 5B the speaker 21 has moved closer to the base station 22 so that the speaker 21 is provided at a lower height than in Fig. 5A. The gap 51 B between the base station 22 and the speaker 21 in Fig. 5B is smaller than the gap 51A between the between the base station 22 and the speaker 21 in Fig. 5A.

In Fig. 5C the speaker 21 has moved again. In the example of Fig. 5C the speaker 21 has moved even closer to the base station 22 so that the speaker 21 is provided at a lower height than in Fig. 5A or Fig. 5B. The gap 51C between the base station 22 and the speaker 21 in Fig. 5C is smaller than the gaps 51A and 51 B between the between the base station 22 and the speaker 21 in Figs. 5A and 5B.

The vertical position of the speaker 21 may be adjusted in response to the detection of a trigger event. In some examples the trigger event may comprise the detection of a user input. The user input may comprise the user applying a force to the speaker 21.

In other examples the trigger event may comprise a change in a parameter of the system 20. The parameter could be a parameter of the audio output provided by the speaker 21, for example the changed parameter could comprise the number of songs in a playlist, the time remaining in a playlist, the volume of the audio output or any other suitable parameter. In some examples the changed parameter could comprise a musical attribute of the audio output. The musical attribute may comprise any characteristic of the audio output such as beat, key, chord, downbeat, tempo, energy, style, genre, rhythm, danceability or any other suitable characteristic.

In some such examples the vertical position of the speaker 21 may be used to indicate information to a user. For instance the vertical position of the speaker 21 may be used to indicate the number of tracks remaining in a playlist or a musical attribute of the audio output or any other suitable information.

In other examples the speaker 21 may be configured to move in time with the audio output of the speaker 21. In such examples the trigger event may comprise a change in a musical characteristic of the audio output such as a beat or downbeat. For instance, for each beat a short time signal may be created to increase the vertical position of the speaker 21. The control signal may allow the speaker 21 to return to the original position before the next beat in the audio output.

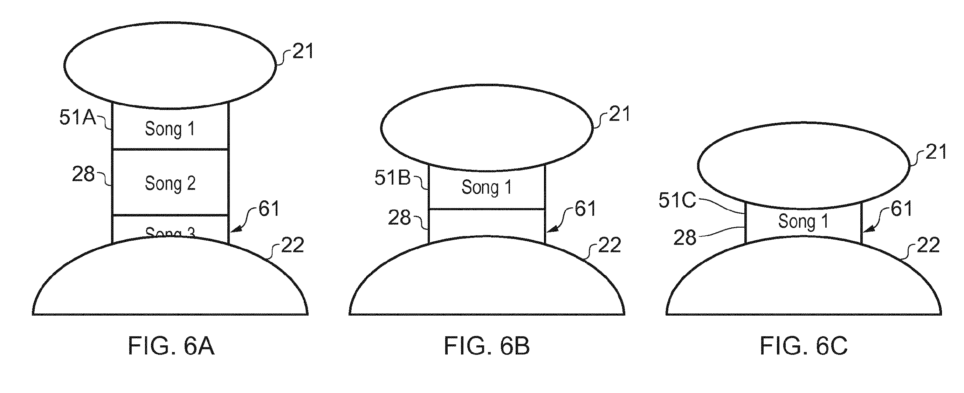

Figs. 6A to 6C illustrate an example system 20 with the speaker 21 positioned at different heights relative to the base station 22. The respective heights of the speaker 21 may be as described above with respect to Figs. 5A to 5C.

In the examples of Figs. 6A to 6C the system 20 is configured to control a display 28 to display information in a space between the speaker 21 and the base station 22. A display 28 is provided in the gaps 51 A, 51 B, 51C between the base station 22 and the speaker 21. The display 28 may comprise any means which may be used to display information to a user. In some examples the display may comprise a screen provided between the speaker 21 and the base station 22. The base station 22 may be configured to display images onto the screen. The screen may be scrolled up or down as the vertical position of the speaker 21 changes.

In other examples the display 28 may comprise a fog screen. The fog screen may comprise an array of suspended vapor particles which can be illuminated by a projector to provide the display 28. The size of the fog screen may be adjusted as the vertical position of the speaker 21 changes.

The information which is displayed on the display 28 may be adjusted as the vertical separation between the base station 22 and the speaker 21 changes. In the example of Figs. 6A to 6C the speaker 21 is configured to play a playlist comprising a plurality of songs. The display 28 is configured to display a list 61 of songs that are remaining in the play list. In the configuration of Fig. 6A there are three songs remaining in the playlist and so there are three songs displayed in the list 61.

After one of the songs has been completed there will be only two songs remaining in the playlist. When controlling circuitry 3 determines that the number of songs remaining in the playlist has reduced the controlling circuitry 3 may control the separation means 25 to reduce the vertical separation of the speaker 21 and the base station 22. After the vertical separation of the speaker 21 and the base station 22 has been reduced the system 20 may be in the configuration illustrated in Fig. 6B. In the configuration of Fig. 6B there are two songs remaining in the playlist and so the controlling circuitry 3 adjusts the information displayed on the display 28 so that two songs displayed in the list 61.

After another of the songs has been completed there is only one song remaining in the playlist. The controlling circuitry 3 again determines that the number of songs remaining in the playlist has reduced and controls the separation means 25 to further reduce the vertical separation of the speaker 21 and the base station 22. After the vertical separation of the speaker 21 and the base station 22 has been further reduced the system 20 may be in the configuration illustrated in Fig. 6C. In the configuration of Fig. 6C there is one song remaining in the playlist and so the controlling circuitry 3 adjusts the information displayed on the display 28 so that one song is displayed in the list 61.

In the examples of Figs. 6A to 6C the information which is displayed comprises the number of songs remaining in a playlist. As the number of songs in the playlist is reduced the size of the list and the size of the image is reduced.

It is to be appreciated that in other examples other images and/or information may be displayed on the display 28. For instance in another example an animation may be displayed. The animation may be synchronised to move in time with the audio output provided by the speaker 21. As an example the animation may comprise a dancing character or a crowd scene or any other suitable images. The movement of the animation may be synchronised to a musical characteristic of the audio output such as the beat and/or downbeat. This may enable an animation such as a dancing character to appear to be dancing in time with the music. Any suitable method may be used to analyze the musical characteristics of the audio output signal and obtain the information necessary to synchronise the audio output with the animation.

In other examples the images displayed on the display may comprise information relating to the output of the speaker 21. For instance the information may comprise the name of the currently playing song and artist or the volume or any other suitable parameters. In these examples the size of the image may be adjusted as the vertical position of the speaker 21 relative to the base station 22 is adjusted. This may enable the size of the image to be scaled to fit in the space between the speaker 21 and the base station 22.

In some examples when all the songs in the playlist have been played the separation means 25 may be arranged so that the speaker 21 is positioned to rest on top of the base station 22. In such an arrangement there may be no gap between the speaker 21 and the base station 22. As there is no gap the display 28 may be configured to stop displaying information.

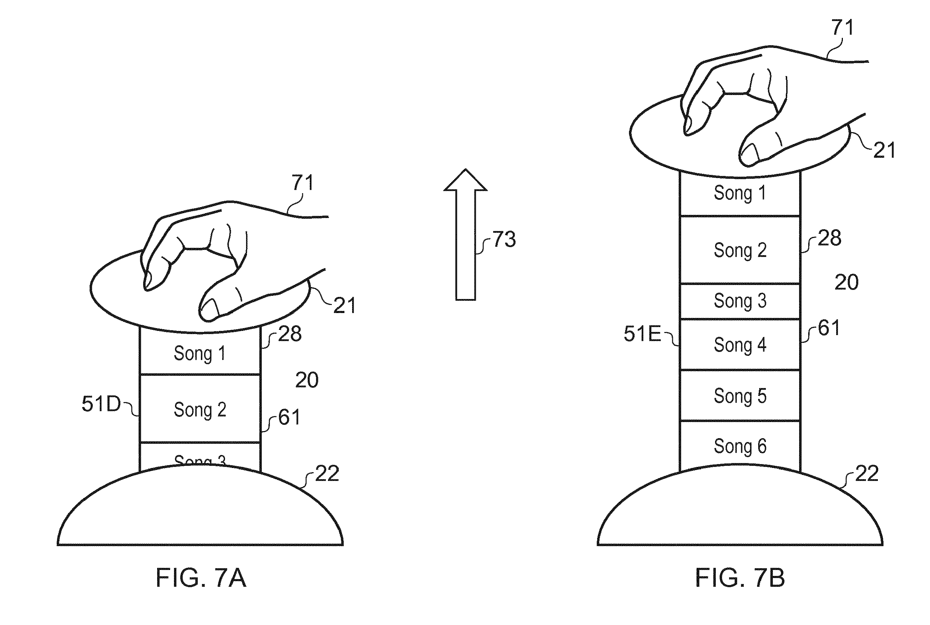

Figs. 7A and 7B illustrate a user using the system 20 to make an input to control functions of the system 20. The function which is performed may be dependent upon the user input that is detected. In the particular example of Figs. 7A and 7B the function which is performed is adding songs to a playlist.

In the configuration of Fig. 7A the speaker 21 is provided at a first vertical position relative to the base station 22. The base station 22 is controlling the speaker 21 to play a playlist where the playlist comprises a plurality of songs. A gap 51 D is provided between the speaker 28 and the base station 22. In the example of Fig. 7A a display 28 is provided between the speaker 21 and the base station 22. The display 28 displays a list 61 of songs remaining in the play list. In the example of Fig. 7A there are three songs remaining in the playlist.

Fig. 7A shows a user making a first input. In Fig. 7A the user holds the speaker 21 with their hand 71 and applies a force to the speaker 21 which changes the vertical position of the speaker 21 relative to the base station 22. In the example of Fig. 7A the user pulls the speaker 21 upwards towards the direction indicated by the arrow 73. This increases the size of the gap 51 D between the base station 22 and the speaker 21.

Fig. 7B shows a configuration of the system 20 after the user has completed the user input. In the configuration of Fig. 7B the speaker 21 is now provided at a second vertical position relative to the base station 22. In Fig. 7B the speaker 21 is provided at a higher position than in Fig. 7A. The gap 51 E between the speaker 21 and the base station 22 has increased.

After the gap 51 E has increased the proximity sensor 45 may detect the new vertical separation between the base station 22 and the speaker 21. In response to detecting the increase in the vertical separation between the base station 22 and the speaker 21 the controlling circuitry 3 may be configured to add more songs to the playlist.

In Fig. 7B after the new songs have been added to the playlist the list 61 displayed by the display 28 is adjusted to show the new songs. In the particular example of Fig. 7B the new vertical position of the speaker 21 causes three additional songs to be added to the playlist. The list 61 of songs displayed in Fig. 7B now comprises six songs.

In some examples when the user touches the speaker 21 with their hand 71 the system 41 may detect that the user has started to make an input. In some examples the speaker 21 may be rotating as it is supported by the separation means 25. When the user touches the speaker 21 with their hand 71 this may stop or slow the rotation of the speaker 21. The change in the rotation may be detected by the camera 43 which detects the movement of the pattern 41 on the lower side of the speaker 21 and provide an indication that the user has started to make an input.

Once the start of the user input has been detected the system 20 may be configured to monitor the change in vertical position of the speaker 21. In some examples if the start of a user input has been detected the proximity sensor 45 may be configured to monitor the change in the vertical position of the speaker 21. When it is determined that the user has completed the user input the proximity sensor 43 may determine the new vertical position of the speaker 21 and control the separation means 25 to ensure that when the user removes their hand 71 from the speaker 21, the speaker 21 remains at the correct vertical position. In some examples the user may complete the user input by holding the speaker 21 at the same vertical position for a predetermined period of time.

In some examples when the proximity detector 43 determines that the user input has been completed and the separation means 25 is configured to support the speaker 21 at the correct vertical position an output may be provided to indicate to the user that the system 20 considers that the user input is complete and that it is safe for the user to remove their hand from the speaker 21. In some examples the indication may comprise a visual indication such as a flashing LED or information displayed on the display 28 or any other suitable means.

The example user input of Figs. 7A and 7B provides an intuitive way of adding items to a play list. It is to be appreciated that the user input may be associated with other functions in other applications of the system 20.

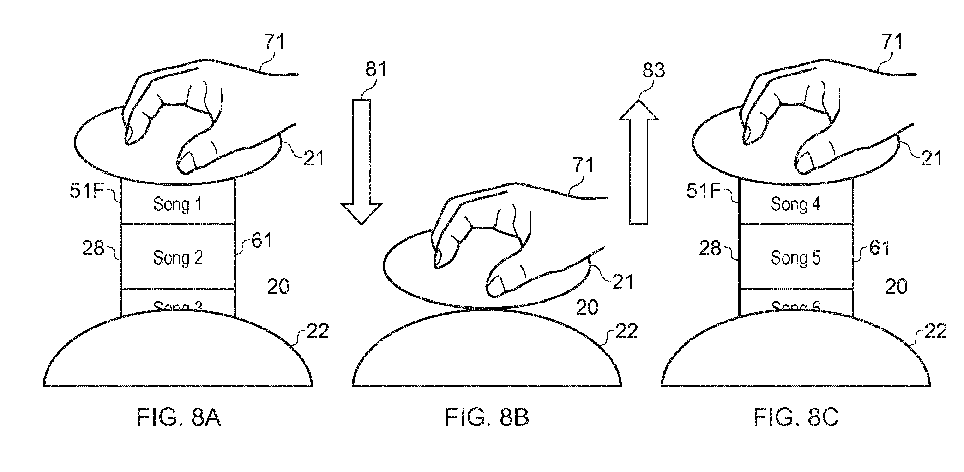

Figs. 8A to 8C illustrate a user using the system 20 to make another user input. In the particular example of Figs. 8A to 8C the function which is performed is resetting a playlist.

In the configuration of Fig. 8A the speaker 21 is provided at a first vertical position relative to the base station 22. The base station 22 is controlling the speaker 21 to play a playlist where the playlist comprises a plurality of songs. A gap 51 F is provided between the speaker 21 and the base station 22. In the example of Fig. 8A a display 28 is provided between the speaker 21 and the base station 22. The display 28 displays a list 61 of songs remaining in the play list. In the example of Fig. 8A there are three songs remaining in the playlist.

Fig. 8A shows a user making a first input. In Fig. 8A the user holds the speaker 21 with their hand 71 and applies a force to the speaker 21 which changes the vertical position of the speaker 21 relative to the base station 22. In the example of Fig. 8A the user pushes the speaker 21 downwards in the direction indicated by the arrow 81. This decreases the size of the gap 51 F between the base station 22 and the speaker 21.

Fig. 8B shows a configuration of the system 20 after the user has completed pushing the speaker 21 downwards. In the configuration of Fig. 8B the speaker 21 is now provided at a second vertical position relative to the base station 22. In Fig. 8B the speaker 21 is provided touching the base station 22 so that there is no vertical separation between the base station 22 and the speaker 21. In the configuration of Fig. 8B there is no gap provided between the base station 22 and the speaker 21. In the configuration of Fig. 8B the speaker 21 is resting on the base station 22.

The user input of pushing the speaker 21 downwards towards the base station 22 may cause songs to be removed from the playlist. If the user pushes the speaker 21 downwards until the speaker is touching the base station 22 then this may cause the playlist to be cleared so that all of the songs are removed from the playlist.

Once the user has pushed the speaker 21 down so that it is touching the base station 22 the user may continue making the user input. In some examples the user may continue making the user input by changing the direction of the force that they are applying to the speaker 21 without removing their hand 71 from the speaker 21. In the example of Fig. 8C the user continues the user input by pulling the speaker 21 upwards towards the direction indicated by the arrow 83. This increases the size of the gap between the base station 22 and the speaker 21. Increasing the vertical position of the speaker 21 relative to the base station 22 may cause new songs to be added to the playlist.

Fig. 8C shows a configuration of the system 20 after the user has completed the user input. In the examples of Figs. 8A to 8C the user pulls the speaker 21 back to the original vertical position. In the configuration of Fig. 8C the speaker 21 is now back at the first, original vertical position relative to the base station 22. The gap 51 F between the speaker 21 and the base station 22 is the same as the original gap 51 F as illustrated in Fig. 8A.

The proximity sensor 43 may detect that the speaker 21 has been returned to the original vertical position. In response to detecting that the speaker 21 has been returned to the original vertical position the controlling circuitry 3 may be configured to add new songs to the playlist. As the speaker 21 is at the same vertical position as it was originally the number of songs may be the same. However, as the playlist has been reset the songs which are contained within the playlist may be different. The list 61 of songs displayed in Fig. 8C now comprises three songs however these are three different songs to the songs in the original playlist.

The example user input of Figs. 8A to 8C provides an intuitive way of resetting a play list. It is to be appreciated that the user input may be associated with other functions in other applications of the system 20.

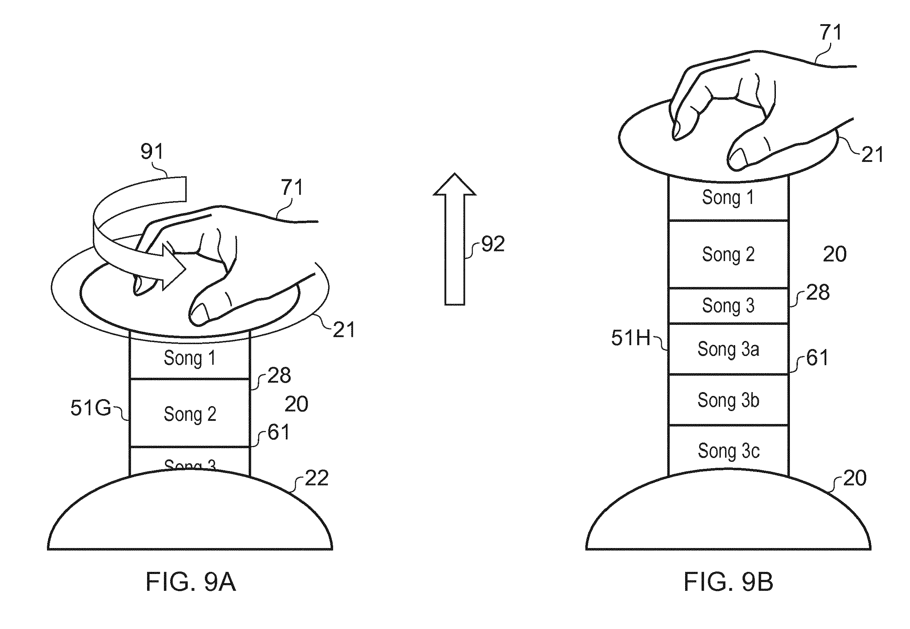

Figs. 9A and 9B illustrate a user using the system 20 to make an input to control functions of the system 20. In the particular example of Figs. 9A and 9B the function which is performed is adding songs to a playlist where the songs are of a particular type.

In the configuration of Fig. 9A the speaker 21 is provided at a first vertical position relative to the base station 22. The base station 22 is controlling the speaker 21 to play a playlist where the playlist comprises a plurality of songs. A gap 51 G is provided between the speaker 28 and the base station 22. As described above, a display 28 is provided between the speaker 21 and the base station 22. The display 28 displays a list 61 of the songs remaining in the play list. In the example of Fig. 9A there are three songs remaining in the playlist.

Fig. 9A shows a user making a first input. In Fig. 9A the user holds the speaker 21 with their hand 71 and rotates the speaker 21. In the example of Fig. 9A the user rotates the speaker 21 in an anticlockwise direction as indicated by the arrow 91.

The rotation of the speaker 21 by the user may be detected by any suitable means, in some examples the rotation may be detected by a gyrometer, accelerometer or any other suitable means which may be located within the speaker 21 and may be configured to detect a change in rotation. In other examples the rotation may be detected by a sensor in the base station 22.

For instance the change in the rotation may be detected by the camera 43 or other suitable means.

When the change in rotation is detected an indication may be provided to the user. In some examples the indication may comprise a visual indication such as a flashing light emitting diode (LED) or information displayed on the display 28 or any other suitable indication.

In the example of Fig. 9A the user also applies a force to the speaker 21 which changes the vertical position of the speaker 21 relative to the base station 22. In the example of Fig. 9A the user pulls the speaker 21 upwards towards the direction indicated by the arrow 92. This increases the size of the gap 51 G between the base station 22 and the speaker 21.

Fig. 9B shows a configuration of the system 20 after the user has completed the user input. In the configuration of Fig. 9B the speaker 21 is now provided at a second vertical position relative to the base station 22. In Fig. 9B the speaker 21 is provided at a higher position than in Fig. 9A. The gap 51 H between the speaker 21 and the base station 22 has increased.

As described above, when the gap between the base station 22 and the speaker 21 is increased new songs are added to the playlist. However, in the example of Figs. 9A to 9B the songs that are added may be of the same type and/or genre and/or sound acoustically similar as the currently playing song. Any suitable method may be used to determine the acoustic similarity of songs.

In Fig. 9B after the new songs have been added to the playlist the list 61 displayed by the display 28 is adjusted to show the new songs. The list 61 of songs displayed in Fig. 9B now comprises six songs. The new songs that have been added are of the same type and/or genre as the song that was playing when the user made the input. Alternatively, or in addition, the songs may sound similar to the song which was playing when the user made the input.

The example user input of Figs. 9A and 9B provides an intuitive way of adding items of a particular type to a play list. In some examples the function which is performed may depend on the direction that the speaker is rotated. For instance, in the example of Figs. 9A and 9B the user rotates the speaker 21 in an anti-clockwise direction and the songs that are added to the playlist are of a similar type. In other examples the user could rotate the speaker 21 in an anticlockwise direction. This may cause a different function to be performed, for example, adding songs of a different type to the playlist.

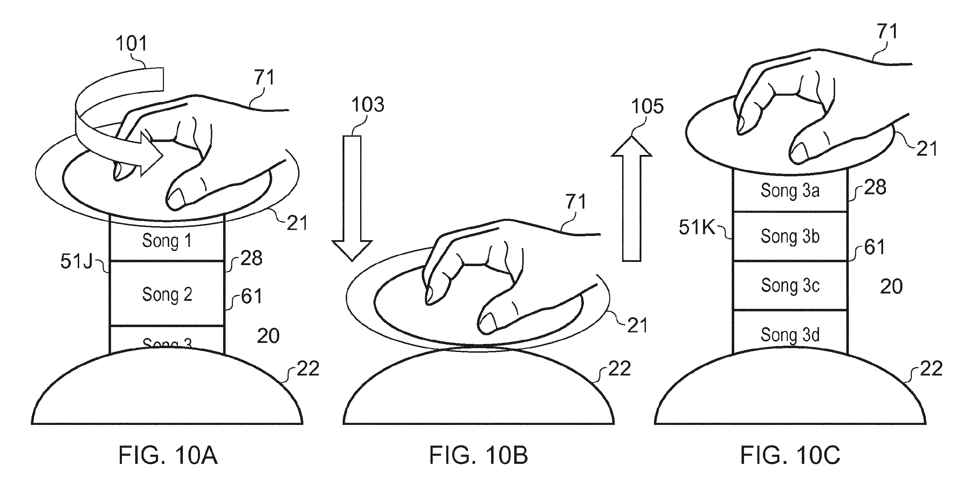

Figs. 10A to 10C illustrate a user using the system 20 to make another user input. In the particular example of Figs. 10A to 10C the function which is performed is resetting a playlist where the reset playlist comprises songs of a particular type.

In the configuration of Fig. 10A the speaker 21 is provided at a first vertical position relative to the base station 22 and the base station 22 is controlling the speaker 21 to play a playlist where the playlist comprises a plurality of songs. A gap 51 J is provided between the speaker 28 and the base station 22. The display 28 displays a list 61 of songs remaining in the play list. In the example of Fig. 10A there are three songs remaining in the playlist.

Fig. 10A shows a user making a first input. In Fig. 10A the user holds the speaker 21 with their hand 71 and rotates the speaker 21. In the example of Fig. 10A the user rotates the speaker 21 in an anticlockwise direction as indicated by the arrow 101.

As described above the rotation of the speaker 21 by the user may be detected by any suitable means, such as a gyrometer, accelerometer located within the speaker 21 or a sensor in the base station 22. When the change in rotation is detected an indication may be provided to the user.

In the example of Fig. 10A the user also applies a force to the speaker 21 which changes the vertical position of the speaker 21 relative to the base station 22. In the example of Fig. 10A the user pushes the speaker 21 downwards towards the direction indicated by the arrow 103. This decreases the size of the gap 51 J between the base station 22 and the speaker 21.

Fig. 10B shows a configuration of the system 20 after the user has completed pushing the speaker 21 downwards. In the configuration of Fig. 10B the speaker 21 is now provided at a second vertical position relative to the base station 22. In Fig. 10B the speaker 21 is provided touching the base station 22 so that there is no vertical separation between the base station 22 and the speaker 21. In the configuration of Fig. 10B there is no gap provided between the base station 22 and the speaker 21. In the configuration of Fig. 10B the speaker 21 is resting on the base station 22.

The user input of pushing the speaker 21 downwards towards the base station 22 may cause songs to be removed from the playlist. If the user pushes the speaker 21 downwards until the speaker is touching the base station 22 then this may cause the playlist to be cleared so that all of the songs are removed from the playlist.

Once the user has pushed the speaker 21 down so that it is touching the base station 22 the user may continue making the user input. In some examples the user may continue making the user input by changing the direction of the force that they are applying to the speaker 21 without removing their hand 71 from the speaker 21. In the example of Fig. 10C the user continues the user input by pulling the speaker 21 upwards towards the direction indicated by the arrow 105. This increases the size of the gap between the base station 22 and the speaker 21. Increasing the vertical position of the speaker 21 relative to the base station 22 may cause new songs to be added to the playlist. However as the user rotated the speaker 21 before making the input the songs which are added to the playlist are of the same type as the song which was playing when the user began to make the user input.

Fig. 10C shows a configuration of the system 20 after the user has completed the user input. In the examples of Figs. 10A to 10C the user pulls the speaker 21 upwards to a vertical position. In the configuration of Fig. 10C the speaker 21 is located at vertical position which is higher than the first, original vertical position. The gap 51 K between the speaker 21 and the base station 22 is now larger than the original gap 51 J as illustrated in Fig. 10A. As the speaker 21 is at a higher vertical position than it was originally the number of songs on the playlist is larger than the number of songs on the playlist when the user began the input. Furthermore, as the playlist has been reset the songs which are contained within the playlist may be different. The list 61 of songs displayed in Fig. 10C now comprises four songs however these are four different songs to the songs in the original playlist. However, the songs are of the same type as the song which as playing originally.

The example user input of Figs. 10A to 10C provides an intuitive way of resetting a play list with songs of a particular type. It is to be appreciated that different types of rotation and movement may cause other functions to be enabled.

The examples described above provide for user inputs which can be used to change the songs on a playlist. It is to be appreciated that similar user inputs could be used to control other parameters of the system 20. For instance, in another example the user may make user inputs to control the volume of the audio output of the speaker. The user input could be a user input which changes the vertical height of the speaker as described above. For instance a user could increase the volume of the audio output by pulling the speaker 21 upwards and could decrease the volume of the audio output by pushing the speaker 21 downwards.

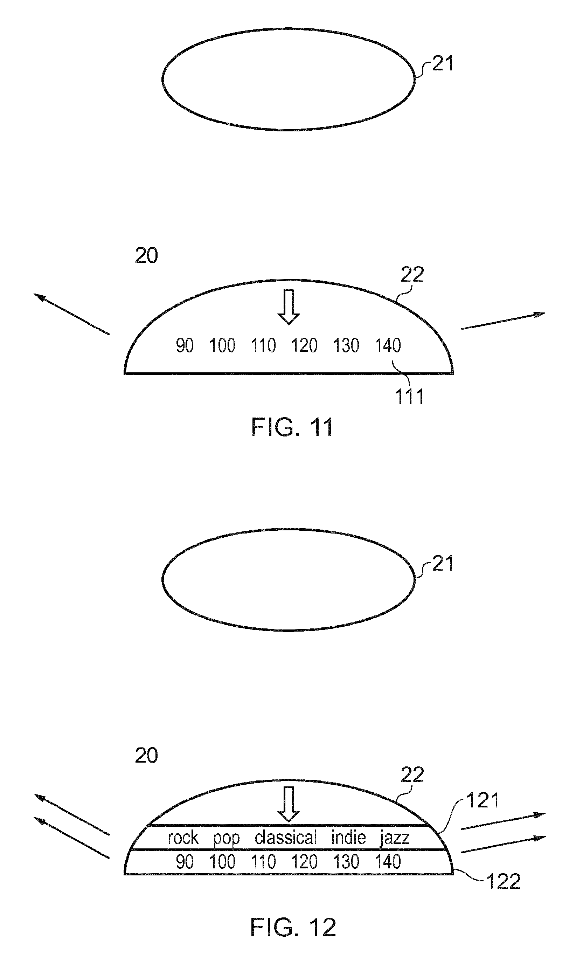

Fig. 11 illustrates an example system 20 in which the base station 22 is configured to rotate. In the example of Fig. 11 the speaker 21 is supported by electromagnets so that it levitates above the base station 22.

The base station 22 may be configured to enable a user to change a parameter of the system 20 by rotating the base station 22 or a portion of the base station. The user may rotate the base station by applying torque to the base station. In the example of Fig. 11 the user may rotate the base station 22 about a vertical axis. The vertical axis may extend in the same direction as the vertical separation between the base station 22 and the speaker 21.

The parameter which is controlled by the rotating of the base station may comprise any suitable parameter. For instance the parameter could be the volume of the audio output of the speaker 21. In the example of Fig. 11 indicia 111 are provided on the base station 22 to indicate the current value of the parameter.

Fig. 12 illustrates another example system 20 in which the base station 22 comprises a plurality of rotating portions 121, 122. The plurality of rotating portions 121, 122 may be configured to rotate independently of each other so that a user can rotate a first rotating portion 121 without rotating a second rotating portion 122. The user may rotate the rotating portions 121, 122 of the base station 22 by applying torque to the base station 22. In the example of Fig. 11 the user may rotate the base station 22 about a vertical axis. The vertical axis may extend in the same direction as the vertical separation between the base station 22 and the speaker 21.

The plurality of rotating portions 121, 122 may enable a plurality of parameters of the system 20 to be controlled. In the example of Fig. 12 each of the plurality of rotating portions 121, 122 may be associated with a different parameter. For instance a first rotating portion 121 may be associated with the parameter of genre of music while a second rotating portion 122 may be associated with the parameter of volume.

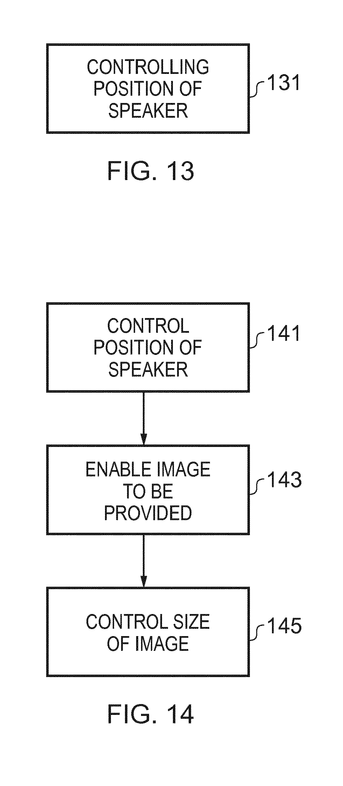

Fig. 13 illustrates another method which may be implemented using the systems 20 described above.

The method of Fig. 13 comprises, at block 131 controlling the position of a speaker 21 relative to a base station 22 wherein the speaker 21 is configured to provide an audio output and the base station 22 is configured to provide a control signal to the speaker 21 to control the audio output of the speaker 21 and wherein the speaker 21 and base station 22 are separated vertically such that the vertical separation between the speaker 21 and the base station 22 is dependent upon a parameter of output of the speaker 21.

In some examples the method of Fig. 13 may be performed by the controlling circuitry 3 of the base station 22. In other examples the method may be performed by the controlling circuitry 3 of the speaker 21. In some examples the processing necessary to implement the method may be distributed between the base station 22 and the speaker 21 so that some blocks of the method are performed by the base station 22 and some are performed by the speaker 21.

The parameter of the output of the speaker 21 could be any suitable parameter. For instance the parameter may comprise, the number of songs in a playlist, the number of the songs remaining in a playlist, the volume of the audio output of the speaker 21 or any other suitable parameter.

The method of Fig. 13 provides the technical effect that the system 20 may be configured so that the vertical position of the speaker 21 relative to the base station 22 provides an indication to the user. The indication may refer to a parameter of the output of the speaker 21.

Fig. 14 illustrates a further method which may be implemented using the systems 20 described above.

The method of Fig. 14 comprises, at block 141 controlling the position of a speaker 21 relative to a base station 22 wherein the speaker 21 is configured to provide an audio output and the base station 22 is configured to provide a control signal to the speaker 21 to control the audio output 22 of the speaker 21 and wherein the speaker 21 and base station 22 are separated vertically.

The method also comprises, at block 143, enabling an image to be provided between the speaker 21 and the base station 22 and controlling, at block 145, the image so that as the vertical separation between the base station 22 and the speaker 21 changes a size of the image is changed.

In some examples the method of Fig. 14 may be performed by the controlling circuitry 3 of the base station 22. In other examples the method may be performed by the controlling circuitry 3 of the speaker 21. In some examples the processing necessary to implement the method may be distributed between the base station 22 and the speaker 21 so that some blocks of the method are performed by the base station 22 and some are performed by the speaker 21.

In some examples controlling the size of the image may comprise changing the amount of information in the image or changing a scale of the image or any other adjustment.

In some examples the image may be provided on a display 28. The display 28 may be positioned between the base station 22 and the speaker 21. In some examples the display 28 may be scrolled in and out as the vertical separation between the base station 22 and the speaker 21 changes. In some examples the image may be provided on a fog screen.

The method of Fig. 14 provides the technical effect that the system 20 may be configured so that the information displayed on the display 28 is adjusted as the separation between the base station 22 and the speaker 21 changes. This may enable the user to be provided with appropriate information for any separation between the base station 22 and the speaker 21.

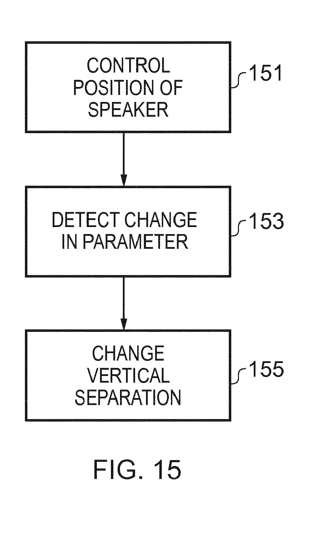

Fig. 15 illustrates an additional method which may be implemented using the systems 20 described above.

The method of Fig. 15 comprises, at block 151 controlling the position of a speaker 21 relative to a base station 22 wherein the speaker 21 is configured to provide an audio output and the base station 22 is configured to provide a control signal to the speaker 21 to control the audio output 22 of the speaker 21 and wherein the speaker 21 and base station 22 are separated vertically.

The method also comprises, at block 153, detecting a change in a parameter of the audio output. At block 155, the method comprises, in response to detecting the change in the parameter, changing the vertical separation between the speaker 21 and the base station 22.

In some examples the method of Fig. 15 may be performed by the controlling circuitry 3 of the base station 22. In other examples the method may be performed by the controlling circuitry 3 of the speaker 21. In some examples the processing necessary to implement the method may be distributed between the base station 22 and the speaker 21 so that some blocks of the method are performed by the base station 22 and some are performed by the speaker 21.

In some examples the parameter of the audio output comprises at least one of; the number of songs in a playlist, the time remaining in a playlist, the volume of the audio output, a musical attribute.

In some examples the change in the vertical separation between the speaker 21 and the base station 22 is synchronised with a musical attribute. The musical attribute may comprise at least one of; beat, key, chord, downbeat, tempo, energy, style, genre, rhythm, danceability.

The method of Fig. 15 provides the technical effect that the system 20 may be configured so that the position of the speaker 21 relative to the base station is synchronised with the audio output. For instance the system 20 could be configured so that the position of the speaker 21 pulsates in time with the rhythm, or other musical attribute, of an audio output.

The term "comprise" is used in this document with an inclusive not an exclusive meaning. That is any reference to X comprising Y indicates that X may comprise only one Y or may comprise more than one Y. If it is intended to use "comprise" with an exclusive meaning then it will be made clear in the context by referring to "comprising only one..." or by using "consisting".

In this brief description, reference has been made to various examples. The description of features or functions in relation to an example indicates that those features or functions are present in that example. The use of the term "example" or "for example" or "may" in the text denotes, whether explicitly stated or not, that such features or functions are present in at least the described example, whether described as an example or not, and that they can be, but are not necessarily, present in some of or all other examples. Thus "example", "for example" or "may" refers to a particular instance in a class of examples. A property of the instance can be a property of only that instance or a property of the class or a property of a sub-class of the class that includes some but not all of the instances in the class. It is therefore implicitly disclosed that a features described with reference to one example but not with reference to another example, can where possible be used in that other example but does not necessarily have to be used in that other example.

Although embodiments of the present invention have been described in the preceding paragraphs with reference to various examples, it should be appreciated that modifications to the examples given can be made without departing from the scope of the invention as claimed. For instance in the above described examples the user makes a user input by holding the speaker 21 and pushing, pulling or rotating the speaker 21. In other examples the user may make a user input using any other gesture such as tapping or any other suitable input.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavoring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. An apparatus comprising:
means for controlling the position of a speaker relative to a base station wherein the speaker is configured to provide an audio output and the base station is configured to provide a control signal to the speaker to control the audio output of the speaker and wherein the speaker and base station are separated vertically; and
means for detecting a user input wherein the user input comprises application of a force to the speaker which changes the vertical position of the speaker relative to the base station; and
means for enabling a function to be performed wherein the function which is performed is dependent upon the detected user input.

2. An apparatus as claimed in claim 1 wherein the speaker is supported by an electromagnetic field.

3. An apparatus as claimed in claim 1 wherein the speaker is supported by a support structure.

4. An apparatus as claimed in any preceding claim wherein the user input comprises at least one of; the user rotating the speaker, the user pushing the speaker, the user pulling the speaker, the user tapping the speaker.

5. An apparatus as claimed in any preceding claim wherein the apparatus comprises means for controlling a display to display information in a space between the speaker and the base station.

6. An apparatus as claimed in claim 5 wherein the information which is displayed comprises information relating to the output of the speaker.

7. An apparatus as claimed in claim 5 wherein the information which is displayed is synchronised with the audio output of the speaker.

8. An apparatus as claimed in any preceding claim wherein the speaker is aligned vertically with the base station.

9. An apparatus as claimed in any preceding claim wherein the function which is performed is determined by the vertical separation of the speaker and the base station after the user input.

10. An apparatus as claimed in claim 9 wherein the change in vertical separation of the speaker and the base station is detected by a proximity sensor.

11. A speaker comprising an apparatus as claimed in any of claims 1 to 10.

12. A base station comprising an apparatus as claimed in any of claims 1 to 10.

13. A method comprising:
controlling the position of a speaker relative to a base station wherein the speaker is configured to provide an audio output and the base station is configured to provide a control signal to the speaker to control the audio output of the speaker and wherein the speaker and base station are separated vertically; and
detecting a user input wherein the user input comprises application of a force to the speaker which changes the vertical position of the speaker relative to the base station; and
enabling a function to be performed wherein the function which is performed is dependent upon the detected user input.

14. A method as claimed in claim 13 wherein the speaker is supported by an electromagnetic field.

15. A computer program comprising computer program instructions that, when executed by processing circuitry, enable:
controlling the position of a speaker relative to a base station wherein the speaker is configured to provide an audio output and the base station is configured to provide a control signal to the speaker to control the audio output of the speaker and wherein the speaker and base station are separated vertically; and
detecting a user input wherein the user input comprises application of a force to the speaker which changes the vertical position of the speaker relative to the base station; and
enabling a function to be performed wherein the function which is performed is dependent upon the detected user input.
